Europäisches Patentamt

European Patent Office

Office européen des brevets

(19)

(11) Numéro de publication: **0 184 599**
A1

# (12) DEMANDE DE BREVET EUROPEEN

(21) Numéro de dépôt: 84420204.4

(22) Date de dépôt: 07.12.84

(51) Int. Cl.⁴: **G 01 D 5/30,** G 01 B 11/02

(43) Date de publication de la demande: **18.06.86 Bulletin 86/25**

(84) Etats contractants désignés: **AT BE CH DE FR GB IT LI LU NL SE**

(71) Demandeur: **Bazenet, Jean Pierre, 77 avenue de l'Eygala, F-38700 Corenc (Isère) (FR)**

(72) Inventeur: **Bazenet, Jean Pierre, 77 avenue de l'Eygala, F-38700 Corenc (Isère) (FR)**

(74) Mandataire: **Maureau, Philippe et al, Cabinet Germain & Maureau Le Britannia - Tour C 20, bld Eugène Déruelle, F-69003 Lyon (FR)**

(54) Dispositif de mesure à capteur de déplacement.

(57) Ce dispositif est du type comprenant une règle (2) graduée à un pas déterminé (n) et un capteur de déplacement monté mobile au-dessus de cette règle (2), ce capteur de déplacement comprenant au moins une source lumineuse (7) éclairant une partie de la graduation lors du déplacement de ce capteur, des moyens de détection photoélectriques aptes à recevoir la lumière réfléchie par la surface de la règle et à émettre des impulsions, ainsi que des moyens de comptage cumulé des impulsions émises au cours du déplacement du chariot.

Selon l'invention, il comporte au moins deux sources lumineuses (7) émettant chacune un mince faisceau lumineux de largeur inférieure au pas (n) de la graduation de la règle (2) et ces sources lumineuses (7) sont déphasées l'une par rapport à l'autre.

Avantageusement, le capteur comporte deux senseurs optiques (7) à réflexion directe, qui sont déphasés entre eux de 90° et émettent chacun un signal carré.

Application à la mesure de distance ou d'angles et à la détection de proximité.

1

# DISPOSITIF DE MESURE A CAPTEUR DE DEPLACEMENT

La présente invention a pour objet un dispositif de mesure à capteur de déplacement destiné plus particulièrement à la mesure de distances.

Ce dispositif est du type formé d'une règle munie de graduations d'un pas déterminé et d'un capteur de déplacement monté déplaçable au-dessus de cette règle.

Le capteur de déplacement comprend au moins une source lumineuse éclairant une partie de la graduation lors du déplacement du capteur, des moyens de détection photoélectriques aptes à recevoir la lumière réfléchie par la surface de règle et à émettre un signal de sortie en forme d'impulsions ainsi que des moyens de comptage cumulés des impulsions émises lors du déplacement du chariot.

Dans les dispositifs de ce type comme, par exemple, celui montré dans le FR 2 506 928, quatre sources lumineuses sont utilisées. Ces sources ne sont pas ponctuelles et il est nécessaire de prévoir des lentilles pour faire converger le faisceau lumineux émis par ces lentilles, en outre, comme chaque faisceau incident recouvre plusieurs graduations, il est nécessaire d'interposer des masques sur le trajet des faisceaux réfléchis afin d'obtenir un décalage de ceux-ci et de pouvoir avoir une lecture.

Ces dispositifs sont donc très complexes et imposent, en outre, que le dispositif détecteur soit placé à une distance fixe au-dessus de la règle du fait de l'utilisation de lentilles convergentes ayant une distance focale fixe.

Dans d'autres dispositifs, comme celui montré dans le EP 0085787, une double graduation est utilisée.

Ces différents dispositifs imposent donc généralement l'utilisation d'une règle graduée particulière, soit dans la forme, soit dans le mode de graduation et ne pouvant pas être adaptée sur des machines déjà existantes.

En outre, les systèmes optiques doivent être conçus particulièrement pour l'usage projeté, ils impliquent des moyens de convergence particuliers et ne peuvent utiliser des systèmes optiques du commerce, et ils imposent l'emploi d'un chariot, sur lequel est fixé le capteur de déplacement, qui soit solidaire de la règle. De plus, ces systèmes optiques sont très compliqués et, par conséquent, très coûteux.

2

Le but de la présente invention est de remédier à ces inconvénients et notamment de fournir un dispositif de mesure à capteur de déplacement et décompte de graduations, qui soit de conception simple et peu coûteuse, tout en offrant une excellente précision, et qui puisse s'adapter sur la plupart des machines et notamment sur celles comportant un élément mobile tel qu'un chariot se déplaçant par rapport à un autre élément fixe de guidage tel qu'une table.

Ce but est atteint en ce que le dispositif selon l'invention comporte au moins deux sources lumineuses émettant chacune un mince faisceau lumineux de largeur inférieure au pas de la graduation de la règle et en ce que les sources lumineuses sont déphasées l'une par rapport à l'autre. De ce fait, comme le déphasage des faisceaux lumineux est réalisé directement à la source, et non pas sur le faisceau réfléchi comme dans les dispositifs connus, et comme chaque faisceau lumineux balaye une seule graduation à la fois, il n'est pas nécessaire de prévoir des masques sur le trajet des faisceaux réfléchis, puisque chaque passage du faisceau sur une graduation provoque l'émission d'une impulsion et qu'on a ainsi une lecture directe de chaque graduation.

Avantageusement aussi, les faisceaux lumineux incidents sont déphasés entre eux d'un angle correspondant à une demi-période du signal de sortie des moyens photoélectriques divisée par le nombre de sources lumineuses.

Cette disposition permet d'avoir, pour chaque graduation de la règle, un nombre d'impulsions régulièrement espacées égal au moins au nombre de sources lumineuses et donc de multiplier d'autant la précision du dispositif.

De préférence, le signal de sortie émis par chaque moyen de détection photo-électrique a la forme d'un signal carré, de sorte que deux impulsions, -un front de montée et un front de sortie- sont émises pour chaque source lumineuse à chaque passage d'une graduation et que la précision de l'ensemble est encore multipliée par deux.

Selon une forme de réalisation préférée de la présente invention, chaque source lumineuse est formée par un senseur optique à réflexion directe incorporant un photo-détecteur.

De toute façon, le dispositif de mesure de l'invention sera bien compris et d'autres caractéristiques seront mises en évidence à l'aide de la description qui suit en référence au dessins schématique annexé en représentant, à titre d'exemples non limitatifs, plusieurs formes de réalisation :

- Figure 1 est une vue en coupe transversale d'une première forme de réalisation du dispositif selon l'invention ;

- Figure 2 est un schéma montrant les différents signaux émis par les photo-détecteurs et reçus par le compteur ;

- Figures 3 et 4 sont des vues similaires à figure 1 du dispositif selon une seconde et troisième forme de réalisation.

- Figure 5 est une vue de dessous du capteur de déplacement de figure 1 ;

- Figure 6 est une vue en coupe partielle selon VI-VI de figure 5 ;

- Figure 7 est une vue de dessus du dispositif de figure 1 ;

- Figure 8 est une vue similaire à figure 7 après réglage du déphasage entre les deux senseurs optiques.

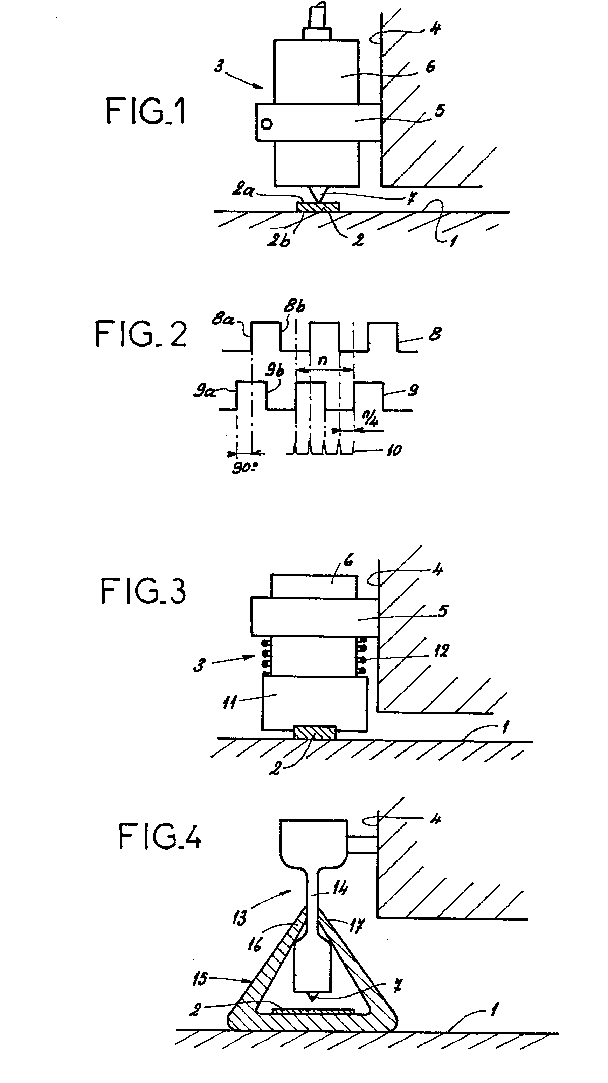

Ainsi que le montre notamment la figure 1, le dispositif de mesure selon l'invention est formé essentiellement d'une règle (2) munie de graduations sur sa face (2a) et d'un capteur de déplacement (3).

La règle graduée (2) est formée par exemple par un ruban souple d'acier gravé à un pas déterminé, n, par exemple, 0,4 mm. Cette règle (2) peut être munie sur sa face (2b) opposée à sa face graduée (2a), d'un adhésif permettant sa fixation par simple collage sur la table de travail (1) d'une machine-outil (non représentée sur le dessin). Elle peut être également fixée sur cette table au moyen de rivets.

Le capteur de déplacement (3) est fixé au moyen d'une bride (5) sur le chariot (4) mobile de la machine-outil de façon à se déplacer avec lui au-dessus de la règle graduée (2), parallèlement et à une certaine distance au-dessus de celle-ci. Ce capteur de déplacement comprend un manchon cylindrique (6) à la partie inférieure duquel sont fixés deux senseurs optiques à réflexion directe (7). Chaque senseur optique est du type connu sous la dénomination commerciale "HEDS 1000" et est formé par une diode électroluminescente émettant un mince faisceau lumineux pratiquement parallèle d'une largeur égale à environ 0,2 mm et par un photodétecteur recevant directement le faisceau lumineux réfléchi et apte à émettre une impulsion électrique à chaque passage sur une graduation de la règle.

Des moyens de comptage cumulé des impulsions électriques émises par chaque photodétecteur au cours du déplacement du capteur sont également, de façon connue en soi, montés à l'intérieur du manchon cylindrique (6) de celui-ci. Ces moyens de comptage sont reliés à un dispositif d'affichage (non représenté sur le dessin) qui affiche en permanence un nombre proportionnel au nombre d'impulsions reçues et correspondant à la distance parcourue par le capteur (3).

Les axes optiques des senseurs optiques (7) sont écartés par exemple de 10,10 mm (pour un pas n = 0,4 mm) ou de 10,125 mm (pour un pas n = 0,5 mm) c'est-à-dire d'une distance égale à $x + \dfrac{n}{2p}$ mm, n étant le pas de la graduation de la règle (2), x étant un nombre entier multiple de n et p étant le nombre de senseurs optiques (7).

De cette façon, les faisceaux lumineux émis par les diodes (7) et, par conséquent, les faisceaux lumineux réfléchis par la règle (2) ainsi que les signaux délivrés par les photodétecteurs sont déphasés d'un angle de $\dfrac{2\pi}{2p}$ soit $\dfrac{\pi}{p}$ puisque la période $2\pi$ des signaux délivrés par les photodétecteurs correspond au pas n de la graduation.

Ainsi, lorsque le capteur de déplacement (3) comporte deux senseurs (7), le déphasage des faisceaux lumineux émis par ceux-ci est de 90°. De même, si le dispositif comportait trois senseurs, le déphasage entre ceux-ci serait de $2\pi$/3 soit 60°.

Cette disposition permet d'une façon très simple et peu coûteuse d'augmenter de façon importante la précision du dispositif de mesure, notamment lorsque les signaux émis par les photodétecteurs ont la forme d'un signal carré, comme montré à la figure 2.

Sur cette figure 2 sont représentés le signal carré (8) issu du signal sinusoïdal émis par le photodétecteur d'un premier senseur (7), le signal carré (9) issu du signal sinusoïdal émis par le photodétecteur du second senseur (7), ce signal (9) étant déphasé de 90° par rapport au premier signal (8), et le signal (10) transmis au compteur.

Le signal (10) comporte sur une même période quatre impulsions régulièrement réparties, chaque impulsion correspondant à un front de montée (8a,9a) ou à un front de descente (8b,9b) des signaux carrés (8,9). L'intervalle entre deux impulsions successives du signal (10) transmis au compteur correspond donc au pas de la graduation divisé par quatre, soit à 0,1 mm pour un pas de 0,4 mm.

On voit donc qu'avec seulement deux senseurs optiques (7), qui sont disponibles dans le commerce et donc d'un coût raisonnable, qui sont déphasés de façon appropriée et réglés de façon à délivrer un signal carré, la sensibilité du système est multipliée par quatre et est égale à 0,1 mm pour un pas de graduation de 0,4 mm.

En outre, la mesure ainsi obtenue est très précise puisque réalisée directement et sans analyse électronique du signal sujette à des dérives et donc à des imprécisions comme dans les autres dispositifs connus.

Dans ce dispositif de mesure, le fonctionnement du capteur (3) est totalement indépendant de la règle, du fait que celui-ci effectue une lecture directe des graduations , et il peut donc être utilisé avec n'importe quelle règle comportant une graduation d'un pas quelconque dans la mesure où ce pas est supérieur à la largeur des faisceaux lumineux émis.

Enfin, ce dispositif de mesure peut être adapté très facilement sur la plupart des machines-outils existantes qui comportent généralement un chariot mobile. Il suffit, en effet, d'adapter sur ce chariot un capteur de déplacement tel que décrit ci-avant et de fixer sur la table de la machine un simple réglet à l'aide, par exemple, d'un ruban autocollant double face, puisque la lecture effectuée par le capteur est totalement indépendante du type de règle employé.

Ce dispositif de mesure n'est soumis à aucun phénomène de vibrations ou d'usure puisqu'il n'y a aucun contact matériel entre la règle et le capteur et est donc très fiable ; en outre, il réduit au minimum l'utilisation des éléments intermédiaires puisqu'il y a lecture directe de chaque graduation.

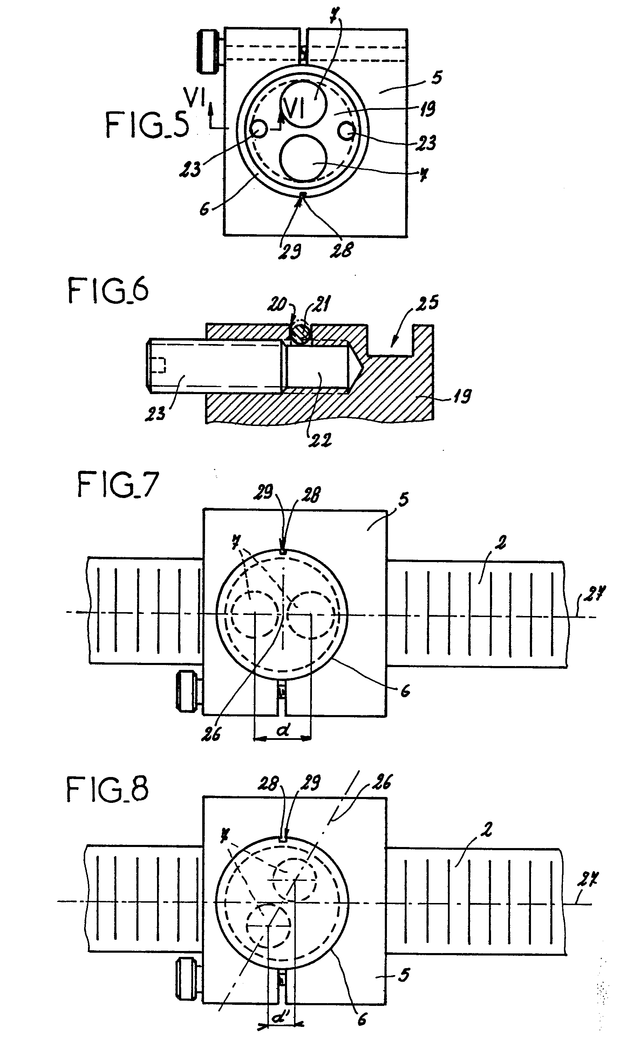

Les figures 3 et 4 montrent d'autres formes de réalisation du dispositif permettant de l'utiliser dans des conditions de travail plus sévères, sur ces figures les éléments identiques seront désignés par les mêmes références que dans la figure 1.

Le capteur (3) montré à la figure 3 est muni à sa partie inférieure d'un patin cylindrique (11), par exemple, en feutre, qui entoure ce capteur et est appliqué contre la règle (2) de façon à essuyer celle-ci lors des déplacements du chariot (4).

Dans ce cas, il y a une certaine liaison physique entre la règle (2) et le capteur (3), mais celle-ci n'affecte pas le fonctionnement des senseurs optiques.

Par ailleurs, dans ce cas, le patin forme une chambre close

6

autour des senseurs, assurant ainsi une protection contre les projections solides abrasives et les lumières parasites. Le patin peut également contribuer à maintenir constante la distance entre les capteurs et la règle.

Des moyens élastiques tels qu'un ressort (12) peuvent également être prévus entre la bride (5) et le patin (11) de façon à plaquer celui-ci contre la règle (2).

Le dispositif de mesure montré à la figure 4 est conçu pour un travail dans des conditions très difficiles avec projection de liquides, poussières et copeaux. Dans ce cas, le capteur de déplacement (13) n'a plus une forme cylindrique comme précédemment mais présente un rétrécissement (14). Il est fixé par sa partie supérieure au chariot (4) d'une machine-outil (non représentée) et comporte à sa partie inférieure des senseurs optiques (7), aptes à se déplacer lors du mouvement du chariot (4) parallèlement et à une certaine distance d'une règle (2) fixée sur la table (1) de la machine-outil.

Dans ce cas, la règle (2) est fixée au fond d'une gouttière ou organe de protection (15) ayant une forme générale prismatique et comportant à sa partie supérieure deux lèvres longitudinales (16,17) enserrant le rétrécissement (14) du capteur (13).

Le matériau constituant l'organe (15) peut être un élastomère, caoutchouc ou silicone possèdant une élasticité et un coefficient de frottement permettant une étanchéité suffisante au niveau du rétrécissement (14) du capteur (13) ainsi que le coulissement de celui-ci.

Cette gouttière (15) protége la partie inférieure du capteur (13) contre toute projection de liquides, poussières et copeaux et permet donc de travailler dans un environnement difficile.

Ce dispositif de mesure selon l'invention peut être utilisé dans n'importe quel type de machine-outil, presse, cisaille, plieuse, etc...

Les figures 5 à 8 montrent un mode de réalisation préféré du capteur de la figure 1, permettant de régler de façon simple et facile le déphasage des senseurs optiques ou cellules (7).

Ainsi que le montre notamment la figure 5, les cellules (7) sont fixées dans un bloc porte-cellules (19) cylindrique lui-même monté rotatif à l'intérieur du manchon (6) à l'extrémité inférieure de celui-ci.

Une gorge périphérique (20) est ménagée sur le bloc porte-cellules (19) et un segment (21) est logé dans cette gorge (Cf. Figures 5 et 6).

Deux trous taraudés (22) diamètralement opposés sont ménagés dans le porte-cellules (19) et s'étendent dans une direction longitudinale à l'intérieur de celui-ci, chaque trou (22) coupant la gorge périphérique (20) comme montré à la figure 6. Des vis (23) sans tête sont aptes à être vissées dans chaque trou (22).

Lorsque chaque vis (23) atteint la gorge (20), elle repousse le segment (21), qui est logé dans celle-ci, radialement vers l'extérieur, comme montré en traits mixtes sur la figure 6, et l'applique contre la paroi interne du manchon (6) à l'intérieur duquel est logé le bloc porte-cellules.

En vissant celles-ci, on assure donc la fixation du bloc porte-cellules (19) au manchon (6).

Le bloc porte-cellules (19) comporte, en outre, une autre gorge périphérique (25) située encore en arrière de la gorge (20) et apte à recevoir un joint torique (non représenté sur le dessin) destiné à assurer l'étanchéité et à protéger le circuit électronique monté à l'intérieur du manchon (6) ,derrière le bloc porte-cellules (19), du milieu extérieur.

Ainsi que le montrent les figures 7 et 8, le réglage du déphasage des senseurs optiques (7) est obtenu en faisant tourner le bloc porte-cellules (19) par rapport au manchon cylindrique (6). En effet, lorsque l'axe (26) des deux senseurs optiques (7) est confondu avec l'axe longitudinal (27) de la règle (2), comme c'est le cas dans la figure 7, la distance entre ceux-ci, projetée selon l'axe (27) de la règle (2), est égale à leur écartement réel (d).

Si l'on fait pivoter le bloc porte-cellules (19) par rapport au manchon cylindrique (6), comme montré à la figure 8, de façon que l'axe (26) des deux senseurs optiques (7) fasse un certain angle avec l'axe longitudinal (27) de la règle (2), la distance entre les deux senseurs optiques, projetée sur l'axe longitudinal (27) de la règle (2), ne sera plus égale à d mais à une distance d' inférieure à d. On voit donc qu'en faisant tourner le bloc porte-cellules (19) par rapport au manchon cylindrique (6), on peut modifier la distance, selon une direction parallèle à l'axe (27) de la règle, entre les deux senseurs optiques (7) et par conséquent régler leur déphasage.

Ce réglage sera effectué en faisant tourner le bloc (19) et en contrôlant simultanément le déphasage des signaux carrés (8) et (9) à l'aide d'un oscilloscope. Lorsque le déphasage désiré est obtenu, le bloc porte-cellules (19) est rendu solidaire du manchon cylindrique, de la façon expliquée précédemment à l'aide des vis sans tête (23).

La bride (5) de fixation du capteur de déplacement (3) est munie d'un pion de centrage (28), saillant radialement vers l'intérieur et apte à s'engager dans une gorge longitudinale associée (29) ménagée selon une directrice du manchon cylindrique (6).

Cette disposition permet de retirer le manchon cylindrique (6) de la bride de fixation (5) par exemple pour le nettoyer et de le remettre en place autant de fois que nécessaire, sans pour autant détruire le réglage du déphasage entre les senseurs optiques (7), puisque le pion de centrage (28) coopérant avec la gorge longitudinale associée (29) assure toujours le même positionnement du manchon (6), c'est-à-dire du capteur, par rapport à sa bride de fixation.

Bien entendu, le pion de centrage pourrait être remplacé par tout autre moyen équivalent, par exemple une simple goupille logée dans une rainure, et d'autres moyens que les vis (23) et le segment (21) pourraient être prévus pour rendre le bloc porte-cellules (19) solidaire du manchon.

Bien entendu également, ce mode de réalisation permettant de régler le déphasage des senseurs optiques peut être adapté aux dispositifs des figures 3 et 4.

Il va de soi que l'invention ne saurait être limitée aux modes spécifiques de réalisation précédemment décrits et l'homme de l'art pourra apporter des variantes d'exécution sans sortir de son cadre.

En particulier, on peut préciser que la table de la machine sur laquelle est fixée la règle n'est pas obligatoirement fixe mais peut également être mobile.

On soulignera également que l'invention est particulièrement appropriée pour la mesure de grandes distances. Dans certains cas, on peut d'ailleurs prévoir plusieurs capteurs sur le même chariot, disposés à des intervalles déterminés et connus ; cette configuration permet d'opérer par exemple avec une règle dont la longueur est inférieure à la distance à mesurer. Aucun des dispositifs de mesure connus antérieurement ne permettait d'obtenir un tel résultat du fait de la dépendance du chariot sur la règle. Le dispositif selon l'invention peut également remplacer les détecteurs de proximité.

**9**

Il est, en outre, bien adapté à la programmation ce qui permet de multiplier ses usages, par exemple à titre de détecteur de positionnement. Il suffit, en effet, de modifier simplement la programmation pour faire remplir différentes fonctions à la même machine, en déplaçant des valeurs de consigne sans avoir à intervenir au niveau des détecteurs.

Le dispositif de mesure selon l'invention peut également être utilisé pour des mesures angulaires sur tourelles, plateformes...etc en utilisant une règle en matériau suffisamment souple pour être installée sur la périphérie de ces tourelles, plateformes.

Pour ce qui concerne la forme de réalisation de l'invention représentée sur la figure 4, il est important de noter que la gouttière (15) est avantageusement réalisée en une seule pièce, ce qui n'était pas possible antérieurement pour des raisons d'ajustage, alors que l'indépendance du capteur par rapport à la règle dans le présent dispositif autorise la réalisation de la gouttière en une seule pièce tout en obtenant la même précision.

10

## - REVENDICATIONS -

1- Dispositif de mesure à capteur de déplacement du type comprenant une règle (2) graduée à un pas déterminé (n) et un capteur de déplacement monté mobile au-dessus de cette règle (2), ce capteur de déplacement comprenant au moins une source lumineuse (7) éclairant une partie de la graduation lors du déplacement de ce capteur, des moyens de détection photoélectriques aptes à recevoir la lumière réfléchie par la surface de la règle et à émettre des impulsions, ainsi que des moyens de comptage cumulé des impulsions émises au cours du déplacement du chariot, caractérisé en ce qu'il comporte au moins deux sources lumineuses (7) émettant chacune un mince faisceau lumineux de largeur inférieure au pas (n) de la graduation de la règle (2) et en ce que les sources lumineuses (7) sont déphasées l'une par rapport à l'autre.

2- Dispositif selon la revendication 1, caractérisé en ce que les faisceaux lumineux incidents sont déphasés entre eux d'un angle correspondant à une demi-période du signal de sortie des moyens photoélectriques divisée par le nombre (p) de sources lumineuses.

3- Dispositif selon la revendication 1 ou la revendication 2, caractérisé en ce que le signal de sortie (8,9) émis par chaque moyen de détection photoélectrique a la forme d'un signal carré.

4- Dispositif selon l'une quelconque des revendications 2 à 3, caractérisé en ce que chaque source lumineuse est formée par un senseur optique à réflexion directe incorporant un photodétecteur.

5- Dispositif selon l'une quelconque des revendications précédentes, caractérisé en ce que le déphasage entre chaque source lumineuse (7) est obtenu en décalant celles-ci d'une distance égale $x + \frac{n}{2p}$ millimètres, avec n étant le pas de la graduation de la règle (2), x étant un nombre entier multiple de n et p étant le nombre de sources lumineuses (7).

6- Dispositif selon l'une quelconque des revendications précédentes, caractérisé en ce que le capteur de déplacement (3,13) est porté par le chariot (4) d'une machine-outil et est apte à se déplacer au-dessus de la règle (2) parallèlement à celle-ci, la règle (2) étant fixée sur la table (1) de la machine-outil.

7- Dispositif selon l'une quelconque des revendications 1 à 6, caractérisé en ce qu'il comporte des moyens d'essuyage de la règle (2) disposés à la partie inférieure du capteur (3).

8- Dispositif selon la revendication 7, caractérisé en ce que les moyens d'essuyage sont constitués par un patin cylindrique appliqué contre la règle (2).

9- Dispositif selon l'une quelconque des revendications 1 à 7, caractérisé en ce que la règle (2) est fixée au fond d'un organe de protection (15) de forme générale prismatique et dont les deux lèvres (16,17) enserrent la partie mince (14) du capteur (13) à la partie inférieure duquel sont adaptés des senseurs optiques (7).

10- Dispositif selon l'une quelconque des revendications précédentes, caractérisé en ce que le déphasage optique des sources lumineuses est réglé en faisant tourner le bloc porte-cellules (19) par rapport au manchon du capteur.

11- Dispositif selon l'une quelconque des revendications précédentes, caractérisé en ce que la règle (2) est formée par un ruban souple d'acier.

0184599

FIG.1

FIG.2

FIG.3

FIG.4

FIG.5

FIG.6

FIG.7

FIG.8

Office européen
des brevets

RAPPORT DE RECHERCHE EUROPEENNE

0184599

Numéro de la demande

EP 84 42 0204

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,D | FR-A-2 506 928 (THE STANLEY WORKS) * Figures; revendications 1-7 * | 1-5,7, 11 | G 01 D 5/30 G 01 B 11/02 |
| | --- | | |
| X,D | EP-A-0 085 787 (Dr. J. HEIDENHAIN GmbH) * Abrégé; figures 1-6 * | 1-7 | |
| | --- | | |
| X | FR-A-2 534 016 (BAZENET) * Abrégé; figures; page 4, ligne 25 - page 5, ligne 11 * | 1-6 | |
| | --- | | |
| X | FR-A-2 410 251 (THE STANLEY WORKS) * Figures 1-3; page 14, ligne 36 - page 15, ligne 18 * | 1-6 | |
| | --- | | DOMAINES TECHNIQUES RECHERCHES (Int. Cl.4) |
| A | US-A-3 942 895 (MEYER) * Abrégé; figures * | 6,11 | |
| | --- | | G 01 B 3 |
| A | GB-A-2 067 283 (GAMON) * Abrégé; figure 2 * | 10 | G 01 B 11 G 01 D 5 |
| | --- | | |
| A | EP-A-0 040 684 (HEIDENHAIN) * Abrégé; figure 2 * | 9 | |
| | ----- | | |

Le présent rapport de recherche a été établi pour toutes les revendications

| Lieu de la recherche | Date d'achèvement de la recherche | Examinateur |
|---|---|---|
| LA HAYE | 15-10-1985 | LLOYD P.A. |